# EUROPEAN PATENT APPLICATION

(11) **EP 1 189 433 A1**
(43) Date of publication of application: **20.03.2002**
(21) Application number: 01307677.3
(22) Date of filing: 10.09.2001
(51) Int. Cl.: H04N 5/445

(54) **Improvements to television system**

(30) Priority: 13.09.2000 GB 0022370
(71) Applicant: Pace Micro Technology PLC, Shipley, West Yorkshire BD18 3LF (GB)
(72) Inventor: Matey, Jesus, Leeds LS4 2SZ (GB); Robson, Glenn, Saltaire, Shipley BD18 3LF (GB)
(74) Representative: Wood, Graham

(57) **Abstract**

The invention relates to a television system and to the generation on the screen and/or audibly, of an indicator to a user of the system of the commencement of a commercial break on a particular channel and/or the end of the break. Various options are also provided to the user which may include any or any combination of, accessing a related internet site, viewing other channels or temporarily pausing recording of data when the indication is generated.

## Description

The invention to which this application relates is an improvement to a television system and which improvement allows the selection of the viewing and/or storage of portions of broadcast material.

Conventionally, most channels, other than those which are funded by a TV licence such as BBC channels, are funded by the provision of commercial breaks which comprise a series of adverts which are generated from data transmitted by broadcasters at time intervals and which are shown for a period of time during transmission of television programs and between different television programs. With this revenue which is received by the broadcaster from the advertiser, the broadcaster can fund the television programs and/or other services. With the advent of receiver apparatus which allows both the reception of broadcast data but also a range of other functions such as Internet access and the provision of further and additional information on that which is provided by the broadcaster, and also the provision of the storage media such as video cassette recorders or hard disk memory to which data relating to television programs can be stored, there are a range of possible options with regard to how a user decides to watch the material which is broadcast to them.

For example, commercials can be irritating to a user in that firstly they break up the flow of a particular television program and, secondly, the user may find some of the adverts themselves irritating. Alternatively, the user may be particularly interested in the material of a particular advert and wish to find more information out about that particular advert at that time and, with the new form of broadcast data receiver it can be possible for them to access a website as indicated in the advert at that time to find out the additional information which they require. Furthermore, if a user wishes to store data relating to a particular program either on storage media they may not wish to store the advertising material and so it is apparent that the provision of adverts can generate a number of particular requirements or desired functions by the user.

It is also known from prior patent documents such as US6052145, W00036755 and W00040025, that broadcasters have attempted to control the activities of users of the Broadcast data receivers during commercial breaks. In W00040025, the broadcaster identifies the commercial breaks and during the breaks provides to the user's receiver specific data which is directed to the particular user, such as targeted adverts and material. The specific data is selected by the broadcaster response to the known user profiles. This system is therefore no more than the specific targeting of data for specific users.

In W00036775 the commercial breaks are identified and the broadcaster, in response to previously received user profiles or user takes the opportunity to transmits information data to the specific user. Again therefore the broadcaster controls what occurs during the commercial break via the receiver.

In US6052145 the occurrence of commercial breaks is monitored by persons at the broadcaster location who, every time a commercial break occurs cause a signal to be transmitted to the broadcast data receiver to indicate the same to the user. This is therefore alive monitoring service which, with the large scale proliferation of television channels appears to be an inefficient method of alerting the user to commercial breaks.

The aim of the present invention is to provide a means whereby a range of functions can become possible to the user but, at the same time, allows the user to be aware of the end of an advertising or commercial break so that they can revisit the television program which they were previously watching.

In a first aspect of the invention there is provided a television system comprising a broadcast data receiver, for the reception of data which is broadcast from a remote location via any of satellite, cable or terrestrial systems, said receiver processing the received data to generate video, audio and/or auxiliary data via a television set or other display screen and speakers and characterised in that a portion of the data which is received relates to commercial breaks which are due to occur in a given time period following the reception of the data said data indicating the start of a portion of data relating to material to be displayed during a commercial break and/or data which identifies the end of the portion of data for the commercial break and, upon receiving one or both of the information data, if the user is, in the given time period, watching a television channel which includes commercial breaks, when a commercial break occurs or is about to occur and/or finish, an indication is generated by the broadcast data receiver to the user to indicate that the commercial break is commencing and/or has finished.

The provision of the indication can be by any suitable means such as a visual display on a display screen and/or an audio indication.

In one embodiment data for each proposed commercial break schedule can be transmitted for a given time period, such as a day, week, month etc., and stored in the broadcast data receiver.

However some programmes which include live footage, such as for example, a sports game, or which may be affected by a live event over running, may have commercial breaks occurring at a different time than when originally indicated and in these circumstances either no data is sent, updated data is sent when it becomes apparent that the commercial break times will change, or live data is sent. However it is desired that this be minimised if possible.

The indication, when received by the user may allow the user to perform a number of operations using the system. In one embodiment, if the commercial break is starting and is indicated, if the user is particularly interested in the material of a particular advert or programme which they are watching, they may select, via a receiver provided to access the Internet, an internet site, such as the particular advertiser or programme and view material thereon via the display screen. If during that time, the commercial break finishes, then the indication of that can be provided to the user and the user can then select whether to continue to view the internet material or, alternatively, to close that connection and return to watch the program which they had been watching prior to the commercial break.

Thus, in this embodiment, the indicator ensures that the user does not miss watching the television program.

In a further embodiment, if the user does not wish to view the commercial break, when the break starts, there can be provided an indication which causes the user to then look at other channels or other functions on the television system and they can continue to do this until the indication of the end of the commercial break appears or sounds. At this time, they are then aware of the commencement of the television program which they have been previously watching and can return to the particular channel in question.

In one embodiment the other function or activity, such as accessing an internet site via the receiver, can be set to be generated automatically, when the commercial break start indicator is generated so that he function commences automatically. The receiver can also be set so that the function stops automatically when the commercial break end indicator is generated.

In one embodiment the data which is used to indicate the commercial break start and end is transmitted as part of the data which can be used to generate an electronic programme guide (EPG) and which is typically used to generate on screen a guide of forthcoming programmes which can be selected by the user.

In a yet further embodiment the user can select at any instant to display all or a portion of the available channels at that instant or times in the future, and for a display to be generated on screen which indicates those channels on which commercial breaks are shown and the times at which the same are being shown. In one embodiment, the display can simply show those channels which aren't showing commercial breaks at a particular time or alternatively a visual differentiation between those which are and aren't showing commercial breaks can be made.

Typically the data, when received, is stored and referenced against two sets of information with the broadcast data receiver, a timing reference and channel selected information. The first reference is to ensure that the received data, which typically includes the time at which each commercial break starts and stops, is referenced against the actual time so that the indicator can be generated when required. The second reference is made so that the indicators for a particular channel will only be generated if the user happens to be viewing the particular channel at the time when the indicator is to be generated.

In a further embodiment when the commercial break has ended the user is notified by means of a graphic display and/or sound and the user then returns to watching the television programme which can be selected by the user or automatically displayed via the broadcast data receiver when the indicator is generated.

In a yet further embodiment, the system includes a storage means which can be, for example, a video cassette recorder or a hard disk memory and if the television program material is being recorded onto the storage media, upon receiving the first information to indicate the commercial break is about to commence for that television program, the control means for the storage media ceases the storage of data until it receives from the receiver the second information data indicating the end of the commercial break, at which point the storage media control means recommences the storage of the data.

In one embodiment when the indicators are generated they are transmitted to the storage means via a SCART connection or via an Infra Red device.

In one embodiment it is possible for the user to select a few events or programmes for recording and identify the capacity exactly required to record the events minus the commercial breaks.

Thus when the user comes to watch the stored data from the storage means, they will not view the commercial breaks.

In one embodiment of the television system, upon reception of an indicator of the commercial break commencing the display format of the display screen changes so as to provide a reduced size display of the commercial break with the remainder of the display used to display another function of the system. Typically, upon receiving the indicator of the end of the commercial break the display returns to the format showing the programme which was being watched prior to the commercial break.

A specific embodiment of the invention will now be described with reference to the accompanying drawings wherein:-
Figure 1 illustrates in a schematic fashion, the various components of a television system in accordance with the invention, and
Figure 2 illustrates an onscreen indication which can be generated in accordance with the invention.

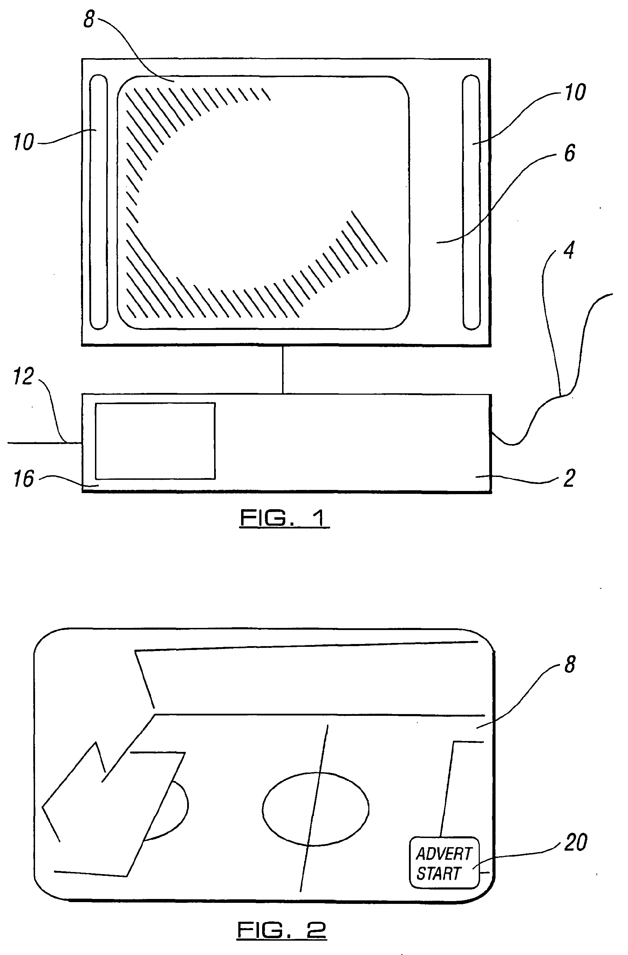

Referring firstly to Figure 1 there is illustrated a television system in accordance with the invention which television system comprises a broadcast data receiver 2 provided with a connection 4 to receive transmitted data via cable, satellite or terrestrial system. When the data is received, it is processed by the broadcast data receiver to allow the generation of video, audio and/or auxiliary information via, in this case, a television set 6 including display screen 8 and speakers 10. The broadcast data receiver is also provided with a communications link 12 to, in this case, a telecommunications network. Also provided, in this case as part of the broadcast data receiver, is a storage means 16 in the form of a hard disk memory on which data which is received by the broadcast data receiver can be stored instead of or at the same time as the data is transmitted via a television set to the user.

The broadcast data receiver, in use, is provided to be tuned to a transport stream of data to the receiver which carries the information about the adverts which should be shown in the commercial break. The user can be allowed to control the receiver such that he receives an indication as to when a commercial break starts and/or finishes on a particular program which they are watching. Upon receiving this indication, the receiver will search for information data which is required to be transmitted by the broadcaster which indicates the start of a commercial break and the end of the commercial break. Upon detecting this information data for the particular program, the receiver generates, in this case, a visual indication in the form of an icon 20 as illustrated in Figure 2 on the display screen.

In a first example of the invention, if the user is watching a particular television program and changes channel upon the start of a commercial break, but he wants to be notified when the commercials are finished so that he can continue to watch the original program, then he can do so in accordance with the invention. Thus, upon receiving the first indication, the user can then decide to look at other channels which are available and when the commercial break is at an end, an indication which can be the same or similar to that shown in Figure 2 is displayed which indicates the end of the commercial break and at which point the user can return to the program which they were watching previously therefore miss the commercial break which they may find irritating. In this embodiment, when the user wants to be notified when he is tuned to another program of the end of the commercial break, it may be necessary to have two tuners supplied in the broadcast data receiver so that one can be tuned to the particular program which the user is looking at during the commercial break and the other is tuned to the channel on which the program which they were previously watching is carried along with the commercials.

In an alternative use of the invention, if a user wishes to record a program on the storage means then the user can be provided with an option, typically via an electronic program guide display on screen, which allows them to record a particular program without the data relating to the adverts being recorded. In this case, with the storage media receiving the data for the television program, if the receiver identifies that a commercial break is to occur, then upon the commencement of the commercial break the recording is stopped by the receiver and/or control means for the storage means and when the receiver receives the data indicating the end of the commercial break then the recording of the data can again be commenced so that when the complete program is recorded, none of the commercial break material will have been recorded.

In a yet further embodiment of the invention, the invention can be used in relation to interactive advertising which allows the possibility of the user accessing the Internet, via the telecommunications link 12 and finding out more information which relates to a particular advert shown during a commercial break. As the user looks through the Internet information the current invention allows them to be aware of when the commercial break from which the Internet access was started has finished. Upon receiving this information then the user can select whether to return to the program which they were watching or continue to browse the Internet.

To allow this embodiment, in the information data received for the commercial breaks, there can be provided information data which indicates when interactive advertising is available to the user and further information data which indicates when the commercials are finished. Furthermore, additional information such as an Internet address for a particular advert or adverts can also be included in the information data.

Thus, with this embodiment, the user can enjoy the facility of interactive advertising without the risk of missing the television program which they were previously watching.

A specific method which allows the transmission of the required data is now described.

The method utilises the use of tables of data known as Special Information (SI) tables of data which are held in storage in broadcast data receivers and which contain data which can be periodically broadcast to the receivers from the broadcaster and which can subsequently be referred to in the processing of the data.

In accordance with the invention, the information provided helps the BDR to create a database containing the commercial breaks (start and end time) for all the channels. Having this database, it is possible for the BDR to tell the user the length of a set of selected programs once the commercials are removed (useful if they are selected for recording). It is also possible that the user can gather information, typically via an on-screen display about the state of a channel, i.e. if an event is being played or commercials are being played at a given time at that instant and/or in the future.

This is achieved by generating and utilising a new data key, known as a descriptor which can be contained in a SI table known as the Extra Information Table (EIT). The descriptor can be called "commercial_breaks_descriptor()", for example, and carries time references or timestamps for a particular programme event, so there has to be one of these descriptors for each event. The timestamps will be interpreted in pairs, as start time and end time of each commercial break in the programme event. There can be as many pairs (as many as commercial breaks) contained in the same descriptor. The content of the descriptor would be something like;

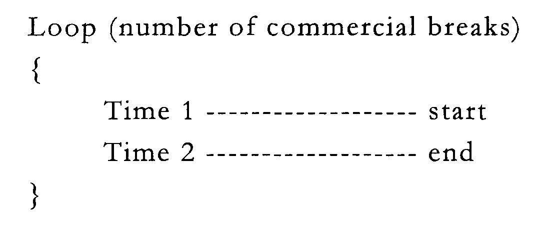

The information contained in the EIT about "event start time" and "event duration" can also be used for the programme event as this information is standard. This can then be repeated and the information held, for each programme event as required.

A combination of the current information and the information provided by the new descriptor will allow the BDR to identify exactly all the commercial breaks in all the channels in a given time period such as , for example, the next 7 days.

This information is usually not variable as most of the events are recorded or very strict in time so there is no need to change the tables very often or to signal in real-time the commercial breaks. However, for certain events like sports or concerts the scheduled commercial break times may vary from actual times and in this case, the content of this descriptors should be updated in real time. The version number of the EIT gets increased and the BDR processes the new table updating the information and so on. There are not many live events being broadcast every day, and not many of them happen at the same time, so it is practical to implement this idea for live events.

## Claims

1. A television system comprising a broadcast data receiver, for the reception of data which is broadcast from a remote location via any of satellite, cable or terrestrial systems, said receiver processing the received data to generate video, audio and/or auxiliary data via a television set or other display screen and speakers and **characterised in that** a portion of the data which is received relates to commercial breaks which are due to occur in a given time period following the reception of the data said data indicating the start of a portion of data relating to material to be displayed during a commercial break and/or data which identifies the end of the portion of data for the commercial break and, upon receiving one or both of the information data, if the user is, in the given time period, watching a television channel which includes commercial breaks, when a commercial break occurs or is about to occur and/or finish, an indication is generated by the broadcast data receiver to the user to indicate that the commercial break is commencing and/or has finished.

2. A television system according to claim 1 **characterised in that** the provision of the indication can be by any suitable means such as a visual display on screen and/or an audio indication.

3. A television system according to claim 1 **characterised in that** the data for each proposed commercial break schedule is transmitted for a given time period and stored in the broadcast data receiver in an information table.

4. A television system according to claim 3 **characterised in that** for programmes which include live events or whose schedule is affected by live events, updated data is broadcast if the commercial breaks are to be shown at times other than those held in the information tables.

5. A television system according to claim 1 **characterised in that** the indication of a start of a commercial break, when generated, allows the user to perform a number of operations using the system.

6. A television system according to claim 1 **characterised in that** user can select, via a receiver provided to access the Internet, an internet site, such as that of a particular advertiser or programme and view the material thereon via the display screen.

7. A television system according to claim 1 **characterised in that** if the user does not wish to view the commercial break, when the break starts, there is provided an indication which automatically causes the system to perform another function.

8. A television system according to claim 7 **characterised in that** the system displays to the user another channel or channels on the television system.

9. A television system according to claim 7 **characterised in that** the function is the accessing of an internet service via the broadcast data receiver.

10. A television system according to claim 7 **characterised in that** the function stops automatically when the commercial break end indicator is generated.

11. A television system according to claim 1 **characterised in that** the data which is used to indicate the commercial break start and end is transmitted as part of the data which can be used to generate an electronic programme guide (EPG) and which is typically used to generate on screen a guide of forthcoming programmes which can be selected by the user.

12. A television system according to claim 11 **characterised in that** the user can select at any instant to display all or a portion of the available channels at that instant or times in the future, and for a display to be generated on screen which indicates those channels on which commercial breaks are shown and the times at which the same are being shown.

13. A television system according to claim 12 **characterised in that** the display shows those channels which aren't showing commercial breaks at a particular time.

14. A television system according to claim 1 **characterised in that** the data, when received, is stored and referenced against two sets of information within the broadcast data receiver, a timing reference and channel selected information.

15. A television system according to claim 14 **characterised in that** the time reference is to ensure that the received data, which typically includes the time at which each commercial break starts and stops, is referenced against the actual time so that the indicator is generated when required.

16. A television system according to claim 14 **characterised in that** channel selected reference is made so that the indicators for a commercial break occurring are only generated if the user is viewing the particular channel on which the commercial break is occurring at the time when the indicator is to be generated.

17. A television system according to claim 1 **characterised in that** the system includes a storage means for the recording or storage of programme data for subsequent viewing and during recording, if an indicator that the commercial break is about to commence for that television program is received, the control means for the storage means ceases the storage of data until it receives from the receiver the second indicator indicating the end of the commercial break, at which point the storage means control means recommences the storage of the data.

18. A television system according to claim 1 **characterised in that** when the indicators are generated they are transmitted to the storage means via a SCART connection or via an Infra Red device.

19. A television system according to claim 1 **characterised in that** upon reception of the indicator of the commercial break commencing the display format of the display screen changes so as to provide a reduced size display of the commercial break material with the remainder of the display used to display another function of the system.

20. A television system according to claim 19 **characterised in that** upon receiving the indicator of the end of the commercial break the display returns to the format showing the programme which was being watched prior to the commercial break.

21. A television system according to claim 1 **characterised in that** if the user is interested in the internet site of a particular advertiser they can access the internet and view material of the advertiser via a link displayed on the advert via the display screen.
